(19) **Europäisches Patentamt / European Patent Office / Office européen des brevets**

(11) **EP 2 868 903 B1**

(12) **EUROPÄISCHE PATENTSCHRIFT**

(45) Veröffentlichungstag und Bekanntmachung des Hinweises auf die Patenterteilung:
**28.12.2016  Patentblatt 2016/52**

(51) Int Cl.:
*F02D 41/02* (2006.01)　　*F02D 29/06* (2006.01)
*F02D 31/00* (2006.01)　　*H02P 9/10* (2006.01)

(21) Anmeldenummer: **14190675.0**

(22) Anmeldetag: **28.10.2014**

(54) **Verfahren zum Betreiben einer mit einem elektrischen Generator verbundenen Brennkraftmaschine**

Method for operating a combustion engine connected with an electric generator

Procédé de fonctionnement d'un moteur à combustion interne relié à un générateur électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2013  AT 8322013**

(43) Veröffentlichungstag der Anmeldung:
**06.05.2015  Patentblatt 2015/19**

(73) Patentinhaber: **GE Jenbacher GmbH & Co OG**
**6200 Jenbach (AT)**

(72) Erfinder:
- **Gomez, Josè**
  **72764 Reutlingen (DE)**
- **Kopecek, Herbert**
  **6130 Schwaz (AT)**
- **Kruckenhausser, Erich**
  **6232 Münster (AT)**

- **Schaumberger, Herbert**
  **6232 Münster (AT)**

(74) Vertreter: **Torggler & Hofinger Patentanwälte**
**Postfach 85**
**6010 Innsbruck (AT)**

(56) Entgegenhaltungen:
**EP-A2- 1 775 450　　WO-A1-2011/088483**
**DE-A1-102006 003 425　　DE-B3-102007 045 195**
**US-A1- 2012 175 876**

- **TERUHISA KUMANO ET AL: "Effect of back-swing phenomenon on the transient stability of synchronous machines", ELECTRICAL ENGINEERING IN JAPAN, Bd. 109, Nr. 5, 10. September 1989 (1989-09-10), Seiten 31-39, XP055206795, ISSN: 0424-7760, DOI: 10.1002/eej.4391090504**

EP 2 868 903 B1

**Beschreibung**

Die Erfindung betrifft ein Verfahren zum Betreiben einer mit einem elektrischen Generator, insbesondere Synchrongenerator, verbundenen Brennkraftmaschine während eines Netzfehlers, insbesondere während eines elektrischen Kurzschlusses, in einem mit dem Generator verbundenen Energieversorgungsnetz, wobei eine von der Brennkraftmaschine abgegebene mechanische Leistung in den Generator eingebracht und im Generator in elektrische Leistung umgewandelt wird, wobei die elektrische Leistung an das Energieversorgungsnetz abgegeben wird.

Während eines Netzfehlers in einem Energieversorgungsnetz, insbesondere während eines elektrischen Kurzschlusses und dem damit verbundenen Abfall der Netzspannung im Energieversorgungsnetz, können an einem mit dem Energieversorgungsnetz verbundenen elektrischen Generator, insbesondere Synchrongenerator, unerwünschte Änderungen von Betriebsgrößen des Generators wie beispielsweise der Drehzahl oder des Lastwinkels auftreten. Als Lastwinkel wird bekannterweise der Winkel zwischen dem Vektor des rotierenden Magnetfeldes im Stator des Generators und dem Vektor des rotierenden Magnetfeldes im Rotor des Generators bezeichnet.

Der Abfall der Netzspannung führt zu einer signifikanten Verringerung der Abgabe von elektrischer Leistung vom Generator an das Energieversorgungsnetz. Bei üblichen Konfigurationen, bei denen ein Rotor des Generators mit einer den Rotor antreibenden Motorwelle einer Brennkraftmaschine (z.B. Gasmotor) verbunden ist, kann dieser elektrische Leistungsabfall zu einer entsprechenden Drehzahlerhöhung der Brennkraftmaschine und somit des Rotors führen. Dadurch kann die Synchronisation des Generators mit dem Energieversorgungsnetz verloren gehen oder sogar ein Schaden im Generator hervorgerufen werden.

Das Erkennen eines Netzfehlers im Energieversorgungsnetz kann beispielsweise dadurch erfolgen, dass die Netzspannung des Energieversorgungsnetzes und/oder der vom Generator in das Energieversorgungsnetz eingespeiste elektrische Strom und/oder die Drehzahl des Generators bzw. der Brennkraftmaschine und/oder das Drehmoment an der Motorwelle der Brennkraftmaschine bzw. an der Rotorwelle des Generators überwacht wird bzw. werden, wobei bei Auftreten einer Änderung mindestens einer dieser überwachten Betriebsgrößen über einen vorgebbaren Schwellwert ein Netzfehler detektiert wird. Dabei kann auch vorgesehen sein, dass auftretende Änderungen erst dann als Netzfehler detektiert werden, wenn mehrere dieser Betriebsgrößen entsprechende Änderungen über vorgebbare Schwellwerte aufweisen, wenn also beispielsweise sowohl die Netzspannung, der elektrische Strom und auch die Drehzahl entsprechende Abweichungen aufweisen. Der Generator kann während des Netzfehlers mit dem Energieversorgungsnetz verbunden bleiben.

Der herkömmliche Ansatz, um auf solche Netzfehler zu reagieren, ist es, entsprechende Maßnahmen zu ergreifen, um einer solchen Erhöhung der Drehzahl und einer damit verbundenen Erhöhung des Lastwinkels des Generators entgegenzuwirken. So werden üblicherweise Maßnahmen ergriffen, welche die Drehzahl und den Lastwinkel reduzieren. Eine solche beispielhafte Maßnahme ist die Reduzierung des Beschleunigungsmomentes, indem eine mit dem Generator verbundene Brennkraftmaschine entsprechend gedrosselt wird (vergl. WO 2011/088483 A1 und US 2012/175876 A1).
Es hat sich jedoch gezeigt, dass die herkömmlichen Maßnahmen bei einem Netzfehler in bestimmten Situationen nachteilig sind. So kann es vorkommen, dass sich die Drehzahl des Generators bei Auftreten eines Netzfehlers nicht erhöht, sondern zunächst abfällt. Dieser dem Fachmann unter dem englischen Fachbegriff "Back-swing" bekannte Effekt (vergl. Teruhisa Kumano et al., Electrical Engineering in Japan, Bd. 109, Nr. 5, 1989-09-10, S. 31 - 39) kann unter Umständen sogar zu Polschlupf des Generators führen. Polschlupf wiederum führt zu einer Instabilität des Generators, bei der eine von einer Brennkraftmaschine über die Motorwelle in den Rotor eingebrachte mechanische Leistung vom Generator nicht mehr wie gewünscht in elektrische Leistung umgewandelt werden kann.

Aufgabe der Erfindung ist es, die vorbeschriebenen Nachteile zu vermeiden und ein gegenüber dem Stand der Technik verbessertes Verfahren zum Betreiben einer mit einem elektrischen Generator, insbesondere Synchrongenerator, verbundenen Brennkraftmaschine während eines Netzfehlers im Energieversorgungsnetz anzugeben.

Diese Aufgabe wird erfindungsgemäß durch die Merkmale des Patentanspruchs 1 gelöst. Vorteilhafte Ausgestaltungen der Erfindung sind in den abhängigen Patentansprüchen angegeben.

In der vorliegenden Anmeldung geht es um subtransiente Effekte, d.h. um Ereignisse, die in einer Zeitskala von wenigen 10 Millisekunden (ms) nach dem Netzfehler erfolgen.
Bevorzugt kommt die Erfindung bei einem Stromversorgungsnetz zum Einsatz, bei welchem die in das Stromversorgungsnetz durch die erfindungsgemäße Brennkraftmaschine eingespeiste Leistung deutlich geringer (zum Beispiel weniger als 10 %, vorzugsweise weniger als 1 %) ist, als die Gesamtleistung des Stromversorgungsnetzes.

Gemäß der Erfindung ist also vorgesehen, dass die von der Brennkraftmaschine abgegebene mechanische Leistung abhängig vom Wert wenigstens einer Betriebsgröße des Generators und/oder der Brennkraftmaschine vor dem Netzfehler und/oder während des Netzfehlers zeitweise erhöht wird, vorzugsweise indem eine Menge eines in die Brennkraftmaschine eingebrachten Brennstoffs erhöht wird, um einen während eines Backswings auftretenden Drehzahlabfall entgegenzuwirken..

Dadurch kann einem während eines Back-swings auftretenden Drehzahlabfall, der im ungünstigen Fall sogar zu Polschlupf des Generators führen kann, entgegengewirkt werden.

Gemäß einer bevorzugten Ausführungsform kann vorgesehen sein, dass der Brennstoff mittels wenigstens einer Brennstoffdosiereinrichtung in die Brennkraftmaschine, vorzugsweise in einen Einlasstrakt der Brennkraftmaschine, eingebracht wird, wobei vorzugsweise je Zylinder der Brennkraftmaschine eine Brennstoffdosiereinrichtung vorgesehen ist. Dabei kann vorgesehen sein, dass die Menge des in die Brennkraftmaschine eingebrachten Brennstoffs erhöht wird, indem eine Öffnungsposition und/oder Öffnungszeit der wenigstens einen Brennstoffdosiereinrichtung verändert wird, wobei die wenigstens eine Brennstoffdosiereinrichtung als Port-Injection-Ventil ausgebildet sein kann. Insbesondere bei Großgasmotoren mit Leistungen von beispielsweise größer 3 MW kann vorgesehen sein, dass die Gemischbildung erst unmittelbar vor den Einlassventilen erfolgt. Bei diesen sogenannten luftaufgeladenen Motoren kann Brennstoff durch jeweils eine Brennstoffdosiereinrichtung für jeden Zylinder individuell dosiert werden. Während gemischaufgeladene Motoren, bei denen die Gemischbildung zentral in einem Gasmischer vor der Verdichtereinheit erfolgt, aufgrund der langen Strecken von der Gemischbildung zu den Brennräumen nur träge auf einen Eingriff in die Brennstoff- bzw. Gasdosierung reagieren, sind die Reaktionszeiten bei luftaufgeladenen Motoren mit Brennstoffdosiereinrichtungen (z.B. in Form von Port-Injection-Ventilen) wesentlich geringer. So kann sich eine Änderung der durch die Brennstoffdosiereinrichtungen eingebrachten Brennstoffmenge bereits binnen 10 ms auf die von der Brennkraftmaschine abgegebene mechanische Leistung auswirken.

Das vorgeschlagene Verfahren ist insbesondere für Generatoren vorteilhaft, die eine Trägheitskonstante von kleiner gleich 1,5 Ws/VA, vorzugsweise kleiner gleich 1 Ws/VA aufweisen, da sich der Back-swing Effekt auf Generatoren mit geringen Trägheitskonstanten stärker auswirkt.

In einer bevorzugten Ausführungsform ist der Generator mittels einer Kupplungsvorrichtung mit der Brennkraftmaschine verbunden. Bei der Brennkraftmaschine kann es sich beispielsweise um einen ottomotorisch betriebenen Hubkolben-Gasmotor handeln.

Abweichungen von Betriebsgrößen des Generators während eines Netzfehlers treten häufig deshalb auf, weil ein Ungleichgewicht zwischen der mechanischen Leistung, die durch die Brennkraftmaschine in den Generator eingebracht wird, und der elektrischen Leistung, die vom Generator in das Energieversorgungsnetz eingespeist wird, auftritt. Im Falle eines in Folge des Netzfehlers auftretenden Back-swing Effekts kann dieses Ungleichgewicht dadurch hervorgerufen werden, dass die elektrische Leistung größer als die mechanische Leistung ist. Durch ein Erhöhen der von der Brennkraftmaschine abgegebenen mechanischen Leistung kann diesem Ungleichgewicht entgegengewirkt werden.

Gemäß einer bevorzugten Ausführungsform der Erfindung kann vorgesehen sein, dass als Betriebsgröße eine vom Generator an das Energieversorgungsnetz abgegebene elektrische Leistung vor dem Netzfehler erfasst wird, wobei die Menge des in die Brennkraftmaschine eingebrachten Brennstoffs abhängig von der vom Generator an das Energieversorgungsnetz abgegebenen elektrischen Leistung vor dem Netzfehler erhöht wird. Dabei kann die Menge des in die Brennkraftmaschine eingebrachten Brennstoffs im Wesentlichen proportional zu einer Differenz der abgegebenen elektrischen Leistung vor dem Netzfehler zu einem vorgebbaren Referenzwert - vorzugsweise der Nennleistung - erhöht werden.

Gemäß einer bevorzugten Ausführungsform kann vorgesehen sein, dass als Betriebsgröße eine Drehzahl des Generators und/oder der Kupplungsvorrichtung und/oder der Brennkraftmaschine vor dem Netzfehler erfasst wird, wobei die Menge des in die Brennkraftmaschine eingebrachten Brennstoffs abhängig von der Drehzahl vor dem Netzfehler erhöht wird.

Vorzugsweise kann auch vorgesehen sein, dass als Betriebsgröße während des Netzfehlers eine transiente Drehzahl des Generators und/oder der Kupplungsvorrichtung und/oder der Brennkraftmaschine erfasst wird, wobei die Menge des in die Brennkraftmaschine eingebrachten Brennstoffs im Wesentlichen proportional zu einer Differenz der transienten Drehzahl zur Drehzahl vor dem Netzfehler erhöht wird.

Beispielsweise kann eine Erhöhung der Menge des in die Brennkraftmaschine eingebrachten Brennstoffs durch Ermittlung einer prozentualen Öffnungsposition oder Öffnungszeit einer Brennstoffdosiereinrichtung in Bezug auf eine vorgebbare Nenn-Öffnungsposition oder Nenn-Öffnungszeit von 100% gemäß folgender Formel F1 vorgenommen werden:

$$S7s = 100\% + (S1_{ref} - S1) \cdot P_{speed},$$

wobei S7s eine prozentuale Öffnungsposition oder Öffnungszeit einer Brennstoffdosiereinrichtung bezüglich einer Nenn-Öffnungsposition oder Nenn-Öffnungszeit von 100% bezeichnet, $S1_{ref}$ eine prozentuale Drehzahl des Generators oder der Kupplungsvorrichtung oder der Brennkraftmaschine vor dem Netzfehler in Bezug auf eine Nenndrehzahl von 100% bezeichnet, S1 die prozentuale transiente Drehzahl des Generators oder der Kupplungsvorrichtung oder der Brennkraftmaschine während des Netzfehlers in Bezug auf eine Nenndrehzahl von 100% bezeichnet und $P_{speed}$ einen positiven Proportionalitätsfaktor bezeichnet, durch den die Intensität der Veränderung der Öffnungsposition oder Öffnungszeit einer Brennstoffdosiereinrichtung beeinflusst werden kann.

Gemäß einer weiteren Ausführungsform kann vorgesehen sein, dass als Betriebsgröße während des Netzfehlers eine Drehzahländerung der Drehzahl des Generators und/oder der Kupplungsvorrichtung und/oder der Brennkraftmaschine erfasst wird, wobei die Menge des in die Brennkraftmaschine eingebrachten Brennstoffs abhängig von der Höhe der Drehzahländerung erhöht wird.

Es kann auch vorgesehen sein, dass als Betriebsgröße während des Netzfehlers ein Drehmoment an einer Motorwelle der Brennkraftmaschine und/oder an einer Rotorwelle des Generators erfasst wird, wobei die Menge des in die Brennkraftmaschine eingebrachten Brennstoffs abhängig vom Drehmoment erhöht wird.

Bei einer weiteren bevorzugten Ausführungsform kann vorgesehen sein, dass als Betriebsgröße während des Netzfehlers ein Lastwinkel des Generators erfasst wird, wobei die Menge des in die Brennkraftmaschine eingebrachten Brennstoffs im Wesentlichen indirekt proportional zur Größe des erfassten Lastwinkels erhöht wird.

Beispielsweise kann eine Erhöhung der Menge des in die Brennkraftmaschine eingebrachten Brennstoffs durch Ermittlung einer prozentualen Öffnungsposition oder Öffnungszeit einer Brennstoffdosiereinrichtung in Bezug auf eine vorgebbare Nenn-Öffnungsposition oder Nenn-Öffnungszeit von 100% gemäß folgender Formel F2 bei einem negativen Lastwinkel vorgenommen werden:

$$S7s = 100\% - (S2/180) \cdot 100\% \cdot P_{load\_angle},$$

wobei S7s eine prozentuale Öffnungsposition oder Öffnungszeit einer Brennstoffdosiereinrichtung bezüglich einer Nenn-Öffnungsposition oder Nenn-Öffnungszeit von 100% bezeichnet, S2 den gemessenen negativen Lastwinkel in Grad bezeichnet und $P_{load\_angle}$ einen positiven Proportionalitätsfaktor bezeichnet, durch den die Intensität der Veränderung der Öffnungsposition oder Öffnungszeit einer Brennstoffdosiereinrichtung beeinflusst werden kann.

Vorzugsweise kann vorgesehen sein, dass die Menge des in die Brennkraftmaschine eingebrachten Brennstoffs maximal bis auf eine vorgebbare Maximalmenge erhöht wird. So kann z.B. ein Maximalwert für die Größe S7s der oben angeführten Formeln F1 bzw. F2 vorgegeben werden, über den die prozentuale Öffnungsposition oder Öffnungszeit einer Brennstoffdosiereinrichtung nicht erhöht werden soll. Durch diese Sicherheitsmaßnahme können kritische Betriebszustände der Brennkraftmaschine vermieden werden.

Gemäß einer besonders bevorzugten Ausführung kann vorgesehen sein, dass Schwingungen einer Betriebsgröße des Generators während des Netzfehlers erfasst werden, wobei die Menge des in die Brennkraftmaschine eingebrachten Brennstoffs erhöht wird, falls die Schwingungen eine vorgebbare Intensität überschreiten. Dabei kann vorgesehen sein, dass Schwingungen eines Lastwinkels des Generators erfasst werden, wobei die Menge des in die Brennkraftmaschine eingebrachten Brennstoffs erhöht wird, falls die Schwingungen eine Amplitude von mehr als 2 Grad, vorzugsweise mehr als 10 Grad, aufweisen.

Weitere Einzelheiten und Vorteile der vorliegenden Erfindung werden anhand der nachfolgenden Figurenbeschreibung erläutert. Dabei zeigen:

Fig. 1    ein schematisches Blockschaltbild eines mit einem Energieversorgungsnetz elektrisch verbundenen Generators, der von einer Brennkraftmaschine angetrieben wird,

Fig. 2    einen beispielhaften zeitlichen Verlauf des Lastwinkels eines Generators während eines Netzfehlers im Energieversorgungsnetz und

Fig. 3    beispielhafte zeitliche Verläufe von Lastwinkel, Drehzahl, Drehmoment und Gasmenge während eines Netzfehlers im Energieversorgungsnetz.

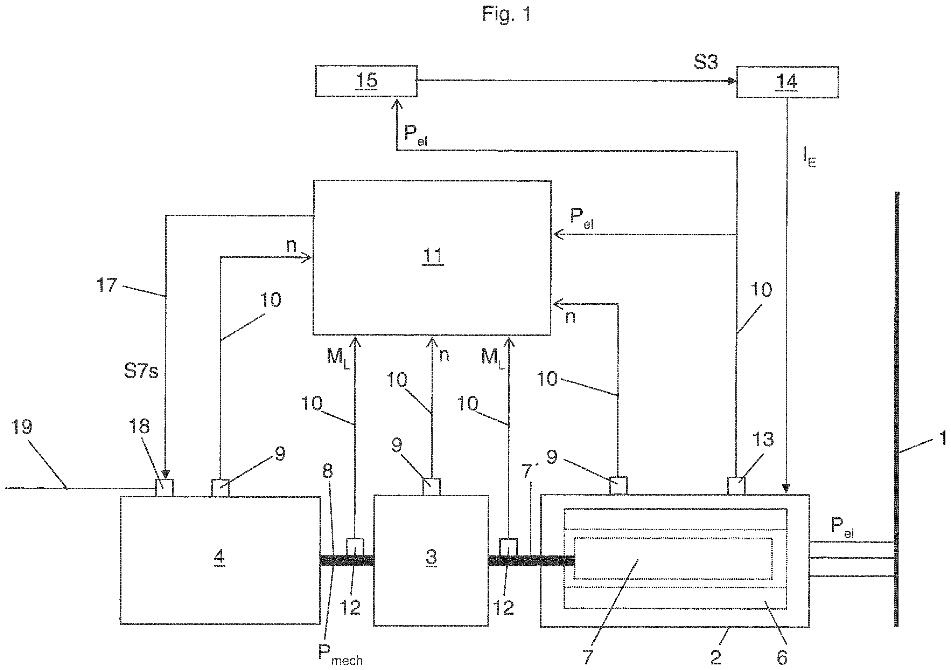

Figur 1 zeigt in einem schematischen Blockschaltbild einen elektrischen Generator 2, der mit einem dreiphasig ausgebildeten Energieversorgungsnetz 1 elektrisch verbunden ist. Der Generator 2 ist als Synchrongenerator ausgebildet und weist einen Stator 6 und einen innerhalb des Stators 6 drehbar angeordneten Rotor 7 auf. Die drei Phasen des Energieversorgungsnetzes 1 sind in bekannter Art und Weise mit Wicklungen am Stator 6 des Generators 2 verbunden. Beim Energieversorgungsnetz 1 kann es sich um ein öffentliches Energieversorgungsnetz handeln, das die Netzfrequenz vorgibt, oder beispielsweise um ein lokales Energieversorgungsnetz im Inselbetrieb, bei dem die Netzfrequenz vom Generator 2 vorgegeben wird. Der Rotor 7 bzw. Läufer des Generators 2 ist über eine Kupplungsvorrichtung 3 mit einer Motorwelle 8 einer Brennkraftmaschine 4 im Wesentlichen drehfest verbunden. Bei der Brennkraftmaschine 4 kann es sich z.B. um einen stationären Gasmotor handeln, der als fremd gezündete, ottomotorisch betriebene Hubkolbenmaschine ausgebildet sein kann.

Eine von der Brennkraftmaschine 4 abgegebene mechanische Leistung $P_{mech}$ wird über die Motorwelle 8 in den Generator 2 eingebracht, im Generator 2 in elektrische Leistung $P_{el}$ umgewandelt, und in weiterer Folge wird die elektrische Leistung $P_{el}$ an das Energieversorgungsnetz 1 abgegeben.

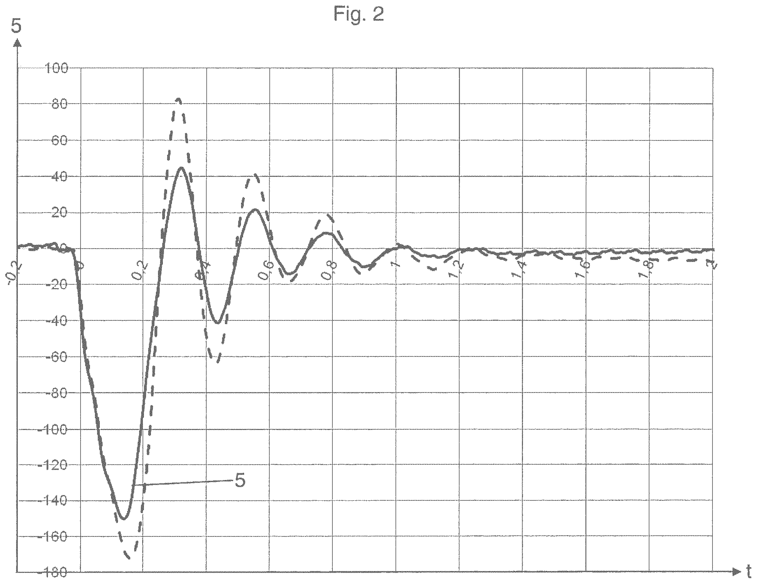

Im gezeigten Beispiel sind am Generator 2, an der Kupplungsvorrichtung 3 und an der Brennkraftmaschine 4 im Stand der Technik bekannte Drehzahlsensoren 9 angeordnet, durch welche die Drehzahl n der Motorwelle 8 bzw. des Rotors 7 erfasst und über entsprechende Signalleitungen 10 an eine Steuervorrichtung 11 gemeldet werden können. Weiters sind hier an der Motorwelle 8 und an der Rotorwelle 7' des Rotors 7 Drehmomentsensoren 12 angeordnet, mit denen das mechanische Drehmoment $M_L$ an der Motorwelle 8 vor der Kupplungsvorrichtung 3 sowie an der Rotorwelle 7' nach der Kupplungsvorrichtung 3 erfasst und über entsprechende Signalleitungen 10 an die Steuervorrichtung 11 gemeldet werden können. Die Steuervorrichtung 11 kann in weiterer Folge beispielsweise aus der erfassten Drehzahl n in bekannter Art und Weise den vorherrschenden Lastwinkel 5 des Rotors 7 ermitteln (siehe Fig. 2). Der Lastwinkel 5 kann rechnerisch auch auf Basis von Generatorreaktanzen und gemessenen elektrischen Größen (z.B. Spannung, Strom, Wirkfaktor) ermittelt werden.

Des Weiteren ist am Generator 2 eine ebenso im Stand der Technik bekannte Leistungsmessung 13 angeordnet, welche die vom Generator 2 in das Energieversorgungsnetz 1 eingespeiste elektrische Leistung $P_{el}$ ermittelt und über eine weitere Signalleitung 10 an die Steuervorrichtung 11 und an einen Spannungsregler 15 meldet. Die Leistungsermittlungsvorrichtung 13 kann dabei in bekannter Weise aus Spannungs- und Strommessungen die elektrische Leistung $P_{el}$ ermitteln.

Der Rotor 7 des Generators weist hier nicht näher dargestellte Erregerwicklungen auf, die von einer Erregungsvorrichtung 14 in Form einer Synchronmaschine mit einem elektrischen Erregerstrom $I_E$ beaufschlagt werden. Die Erregungsvorrichtung 14 wird von einem Spannungsregler 15 mit einer Erregerspannung S3 beaufschlagt, wodurch sich ein der Erregerspannung S3 entsprechender Erregerstrom $I_E$ für die Erregerwicklungen am Rotor 7 des Generators 2 einstellt.

Über eine Motorsteuerleitung 17 können Stellorgane der Brennkraftmaschine 4 angesteuert werden, um die von der Brennkraftmaschine 4 abgegebene mechanische Leistung zu verändern. Bei den Stellorganen kann es sich beispielsweise um Brennstoffdosiereinrichtungen 18 handeln, die einen über eine Brennstoffleitung 19 bereitgestellten Brennstoff in die Brennkraftmaschine 4 einbringen.

Insbesondere kann es sich bei der Brennkraftmaschine 4 um einen luftaufgeladenen Gasmotor handeln, bei dem je Zylinder des Gasmotors eine Brennstoffdosiereinrichtung 18 vorgesehen ist, um eine von der Steuervorrichtung 11 jeweils festgelegte Menge an Brennstoff zylinderindividuell in den jeweiligen Einlasstrakt eines Zylinders einzubringen. Die jeweilige Menge an Brennstoff kann dabei über die Öffnungsposition und/oder die Öffnungszeit der entsprechenden Brennstoffdosiereinrichtung 18 eingestellt werden.

Während eines Netzfehlers im Energieversorgungsnetz 1, insbesondere während eines Netzfehlers, der einen Back-swing Effekt zur Folge hat, ermittelt die Steuervorrichtung 11 abhängig vom Wert wenigstens einer Betriebsgröße des Generators 2 und/oder der Brennkraftmaschine 4 vor dem Netzfehler und/oder während des Netzfehlers entsprechend veränderte Öffnungspositionen und/oder Öffnungszeiten S7s der Brennstoffdosiereinrichtungen 18 der Brennkraftmaschine 4, um die Menge des in die Brennkraftmaschine 4 einzubringenden Brennstoffs zu erhöhen. Die veränderten Öffnungspositionen und/oder Öffnungszeiten S7s der Brennstoffdosiereinrichtungen 18 werden von der Steuervorrichtung 11 über die Motorsteuerleitung 17 an die Brennstoffdosiereinrichtungen 18 der Brennkraftmaschine 4 gemeldet.

Bei den veränderten Öffnungspositionen und/oder Öffnungszeiten S7s kann es sich um prozentuale Öffnungspositionen oder Öffnungszeiten der Brennstoffdosiereinrichtungen 18 in Bezug auf eine Nenn-Öffnungsposition oder Nenn-Öffnungszeit von 100% handeln. Die veränderten Öffnungspositionen und/oder Öffnungszeiten S7s der Brennstoffdosiereinrichtungen 18 können dabei gemäß den obigen Formeln F1 bzw. F2 ermittelt werden.

Figur 2 zeigt einen beispielhaften Verlauf des Lastwinkels 5 des Rotors 7 des Generators 2 in Grad über die Zeit t in Sekunden während eines Netzfehlers, der einen Back-swing Effekt zur Folge hat. Wie in der Abbildung zu erkennen ist, treten während des Netzfehlers Schwingungen des Lastwinkels 5 auf. Der strichlierte Verlauf zeigt die Schwingungen des Lastwinkels 5 bei Anwendung herkömmlicher Steuermaßnahmen in Bezug auf den Netzfehler und die durchgezogene Linie zeigt den Verlauf des Lastwinkels 5 bei Anwendung des vorgeschlagenen Verfahrens. Wie deutlich zu erkennen ist, wird bei Anwendung des vorgeschlagenen Verfahrens die Amplitude der Schwingung des Lastwinkels 5 reduziert, wodurch sich insgesamt eine höhere Stabilität des Generators 2 während des Netzfehlers ergibt. In Bezug auf diese Abbildung ist anzumerken, dass ein Lastwinkel 5 von + oder - 180 Grad die Schlupfgrenze darstellt und daher, wie zu erkennen ist, der Generator 2 ohne das vorgeschlagene Verfahren bereits sehr nahe an die Schlupfgrenze herangeführt wird.

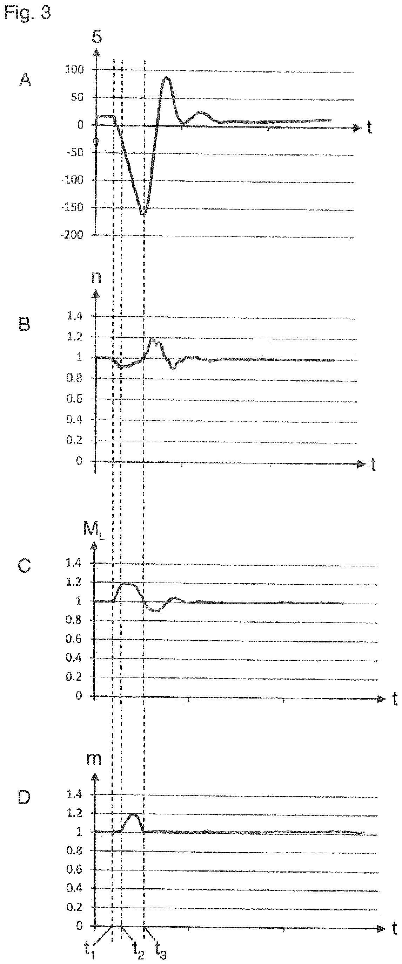

Figur 3 zeigt beispielhafte zeitliche Verläufe von Lastwinkel 5, Drehzahl n, Drehmoment $M_L$ und Menge m eines in eine Brennkraftmaschine 4 eingebrachten Brennstoffs während eines Netzfehlers in einem Energieversorgungsnetz 1.

Dabei zeigt Diagramm A den Verlauf des Lastwinkels 5 eines mit der Brennkraftmaschine 4 verbundenen Generators 2 (siehe Fig. 1) über die Zeit t. Diagramm B zeigt den Verlauf der Drehzahl n der Brennkraftmaschine 4 über die Zeit t. Diagramm C zeigt den Verlauf des mechanischen Drehmoments $M_L$ an einer Motorwelle 8 der Brennkraftmaschine 4 über die Zeit t. Diagramm D zeigt den Verlauf der Menge m eines in die Brennkraftmaschine 4 eingebrachten Brennstoffs über die Zeit t.

Zum Zeitpunkt $t_1$ tritt ein Netzfehler im Energieversorgungsnetz 1 auf, mit dem der Generator 2 verbunden ist. Der hier gezeigte Netzfehler hat einen Back-swing Effekt zur Folge, wie an der unmittelbar auf den Netzfehler folgenden zunächst absinkenden Drehzahl n der Brennkraftmaschine 4 zu erkennen ist. Dadurch ergibt sich auch ein sich entsprechend vergrößernder Lastwinkel 5 und ein sich erhöhendes mechanisches Drehmoments $M_L$ an der Motorwelle 8 der Brennkraftmaschine 4. Aufgrund einer Erkennung dieser Drehzahländerung zum Zeitpunkt $t_2$ wird gemäß dem vorgeschlagenen Verfahren die Menge m des in die Brennkraftmaschine 4 eingebrachten Brennstoffs erhöht.

Durch das zeitweise Erhöhen der Menge m des in die Brennkraftmaschine 4 eingebrachten Brennstoffs kann dieser Drehzahlabsenkung bzw. Drehmomenterhöhung entgegengewirkt werden. Dadurch erreichen zum Zeitpunkt $t_3$ die Drehzahl n und das Drehmoments $M_L$ wieder ihre vor Eintritt des Netzfehlers vorherrschenden Werte, woraufhin auch die Menge m des in die Brennkraftmaschine 4 eingebrachten Brennstoffs wieder auf den Wert gebracht wird, der vor Eintritt des Netzfehlers vorherrschte.

Insgesamt kann durch das vorgeschlagene Verfahren die Stabilität von elektrischen Generatoren bzw. Kraftanlagen umfassend wenigstens einen von einer Brennkraftmaschine angetriebenen elektrischen Generator in Situationen erhöht werden, in denen ein durch einen Netzfehler ausgelöster Back-swing Effekt auftritt. Während solcher Fehlersituationen mit Back-swing Effekt sind herkömmliche Steuermaßnahmen kontraproduktiv, da herkömmliche Steuermaßnahmen den Backswing Effekt nicht beachten und beispielsweise die Menge des in die Brennkraftmaschine einzubringenden Brennstoffs drosseln anstatt diese zu erhöhen.

Es ist vorgesehen, dass das vorgeschlagene Verfahren bei einem Netzfehler nur während des Auftretens eines Back-swing Effekts zum Einsatz kommt und nach Abklingen des Back-swing Effekts wieder herkömmliche Steuermaßnahmen ergriffen werden.

**Patentansprüche**

1. Verfahren zum Betreiben einer mit einem elektrischen Generator (2), insbesondere Synchrongenerator, verbundenen Brennkraftmaschine (4) während eines Netzfehlers, insbesondere während eines elektrischen Kurzschlusses, in einem mit dem Generator (2) verbundenen Energieversorgungsnetz (1), wobei eine von der Brennkraftmaschine (4) abgegebene mechanische Leistung ($P_{mech}$) in den Generator (2) eingebracht und im Generator (2) in elektrische Leistung ($P_{el}$) umgewandelt wird, wobei die elektrische Leistung ($P_{el}$) an das Energieversorgungsnetz (1) abgegeben wird, **dadurch gekennzeichnet, dass** die von der Brennkraftmaschine (4) abgegebene mechanische Leistung ($P_{mech}$) abhängig vom Wert wenigstens einer Betriebsgröße des Generators (2) und/oder der Brennkraftmaschine (4) vor dem Netzfehler und/oder während des Netzfehlers zeitweise erhöht wird, um einem während eines Back-swings auftretenden Drehzahlabfall entgegenzuwirken.

2. Verfahren nach Anspruch 1, **dadurch gekennzeichnet, dass** die von der Brennkraftmaschine (4) abgegebene mechanisches Leistung ($P_{mech}$) erhöht wird, indem eine Menge (m) eines in die Brennkraftmaschine (4) eingebrachten Brennstoffs erhöht wird.

3. Verfahren nach Anspruch 2, **dadurch gekennzeichnet, dass** der Brennstoff mittels wenigstens einer Brennstoffdosiereinrichtung in die Brennkraftmaschine (4), vorzugsweise in einen Einlasstrakt der Brennkraftmaschine (4), eingebracht wird, wobei die Menge (m) des in die Brennkraftmaschine (4) eingebrachten Brennstoffs vorzugsweise so erhöht wird, indem eine Öffnungsposition und/oder Öffnungszeit der wenigstens einen Brennstoffdosiereinrichtung verändert wird.

4. Verfahren nach Anspruch 3, **dadurch gekennzeichnet, dass** je Zylinder der Brennkraftmaschine eine Brennstoffdosiereinrichtung vorgesehen ist.

5. Verfahren nach Anspruch 4, **dadurch gekennzeichnet, dass** zur Einbringung des Brennstoffs eine als Port-Injection-Ventil ausgebildete Brennstoffdosiereinrichtung verwendet wird.

6. Verfahren nach einem der Ansprüche 1 bis 5, **dadurch gekennzeichnet, dass** als Generator (2) ein Generator (2) mit einer Trägheitskonstante von kleiner gleich 1,5 Ws/VA, vorzugsweise kleiner gleich 1 Ws/VA verwendet wird.

7. Verfahren nach einem der Ansprüche 1 bis 6, **dadurch gekennzeichnet, dass** zur Verbindung des Generators (2) mit der Brennkraftmaschine (4) eine Kupplungsvorrichtung (3) verwendet wird.

8. Verfahren nach einem der Ansprüche 2 bis 7, **dadurch gekennzeichnet, dass** als Betriebsgröße eine vom Generator (2) an das Energieversorgungsnetz (1) abgegebene elektrische Leistung ($P_{el}$) vor dem Netzfehler erfasst wird, wobei die Menge (m) des in die Brennkraftmaschine (4) eingebrachten Brennstoffs abhängig von der vom Generator (2) an das Energieversorgungsnetz (1) abgegebenen elektrischen Leistung ($P_{el}$) vor dem Netzfehler erhöht wird.

9. Verfahren nach Anspruch 8, **dadurch gekennzeichnet, dass** die Menge (m) des in die Brennkraftmaschine (4) eingebrachten Brennstoffs im Wesentlichen proportional zu einer Differenz der abgegebenen elektrischen Leistung ($P_{el}$) vor dem Netzfehler zu einem vorgebbaren Referenzwert - vorzugsweise der Nennleistung - erhöht wird.

10. Verfahren nach einem der Ansprüche 2 bis 9, **dadurch gekennzeichnet, dass** als Betriebsgröße eine Drehzahl des Generators (2) und/oder einer den Generator (2) mit der Brennkraftmaschine (4) verbindenden Kupplungsvorrichtung (3) und/oder der Brennkraftmaschine (4) vor dem Netzfehler erfasst wird, wobei die Menge (m) des in die Brennkraftmaschine (4) eingebrachten Brennstoffs abhängig von der Drehzahl vor dem Netzfehler erhöht wird.

11. Verfahren nach einem der Ansprüche 2 bis 10, **dadurch gekennzeichnet, dass** als Betriebsgröße während des Netzfehlers eine transiente Drehzahl des Generators (2) und/oder einer den Generator (2) mit der Brennkraftmaschine (4) verbindenden Kupplungsvorrichtung (3) und/oder der Brennkraftmaschine (4) erfasst wird, wobei die Menge (m) des in die Brennkraftmaschine (4) eingebrachten Brennstoffs im Wesentlichen proportional zu einer Differenz der transienten Drehzahl zur Drehzahl vor dem Netzfehler erhöht wird.

12. Verfahren nach einem der Ansprüche 2 bis 11, **dadurch gekennzeichnet, dass** als Betriebsgröße während des Netzfehlers eine Drehzahländerung der Drehzahl des Generators (2) und/oder einer den Generator (2) mit der Brennkraftmaschine (4) verbindenden Kupplungsvorrichtung (3) und/oder der Brennkraftmaschine (4) erfasst wird, wobei die Menge (m) des in die Brennkraftmaschine (4) eingebrachten Brennstoffs abhängig von der Höhe der Drehzahländerung erhöht wird.

13. Verfahren nach einem der Ansprüche 2 bis 12, **dadurch gekennzeichnet, dass** als Betriebsgröße während des Netzfehlers ein Drehmoment ($M_L$) an einer Motorwelle (8) der Brennkraftmaschine (4) und/oder an einer Rotorwelle (7') des Generators (2) erfasst wird, wobei die Menge (m) des in die Brennkraftmaschine (4) eingebrachten Brennstoffs abhängig vom Drehmoment ($M_L$) erhöht wird.

14. Verfahren nach einem der Ansprüche 2 bis 13, **dadurch gekennzeichnet, dass** als Betriebsgröße während des Netzfehlers ein Lastwinkel (5) des Generators (2) erfasst wird, wobei die Menge (m) des in die Brennkraftmaschine (4) eingebrachten Brennstoffs im Wesentlichen indirekt proportional zur Größe des erfassten Lastwinkels (5) erhöht wird.

15. Verfahren nach einem der Ansprüche 2 bis 14, **dadurch gekennzeichnet, dass** die Menge (m) des in die Brennkraftmaschine (4) eingebrachten Brennstoffs maximal bis auf eine vorgebbare Maximalmenge erhöht wird.

16. Verfahren nach einem der Ansprüche 2 bis 15, **dadurch gekennzeichnet, dass** Schwingungen einer Betriebsgröße des Generators (2) während des Netzfehlers erfasst werden, wobei die Menge (m) des in die Brennkraftmaschine (4) eingebrachten Brennstoffs erhöht wird, falls die Schwingungen eine vorgebbare Intensität überschreiten.

17. Verfahren nach Anspruch 16, **dadurch gekennzeichnet, dass** Schwingungen eines Lastwinkels (5) des Generators (2) erfasst werden, wobei die Menge (m) des in die Brennkraftmaschine (4) eingebrachten Brennstoffs erhöht wird, falls die Schwingungen eine Amplitude von mehr als 2 Grad, vorzugsweise mehr als 10 Grad, aufweisen.

## Claims

1. A method of operating an internal combustion engine (4) connected to an electric generator (2), in particular a synchronous generator, during a network fault, in particular during an electric short-circuit, in a power supply network (1) connected to the generator (2), wherein a mechanical power ($P_{mech}$) delivered by the internal combustion engine (4) is introduced into the generator (2) and converted into electric power ($P_{el}$) in the generator (2), wherein the electric power ($P_{el}$) is delivered to the power supply network (1), **characterised in that** the mechanical power ($P_{mech}$) delivered by the internal combustion engine (4) is at least temporarily increased in dependence on the value of at least one operating parameter of the generator (2) and/or the internal combustion engine (4) prior to the network fault and/or during the network fault, to counteract a drop in rotary speed during a back-swing.

2. A method as set forth in claim 1, **characterised in that** the mechanical power ($P_{mech}$) delivered by the internal combustion engine (4) is being increased by increasing an amount (m) of fuel introduced into the internal combustion engine (4).

3. A method as set forth in claim 2 **characterised in that** the fuel is introduced into the internal combustion engine (4), preferably into an induction tract of the internal combustion engine (4), by means of at least one fuel metering device, wherein the amount (m) of the fuel introduced into the internal combustion engine (4) is increased by an open position and/or open time of the at least one fuel metering device being altered.

4. A method as set forth in claim 3, **characterised in that** there is provided a respective fuel metering device for each cylinder of the internal combustion engine.

5. A method as set forth in claim 4 **characterised in that** the at least one fuel metering device is in the form of a port injection valve.

6. A method as set forth in one of claims 1 through 5 **characterised in that** the generator (2) has an inertia constant of less than or equal to 1.5 Ws/VA, preferably less than or equal to 1 Ws/VA.

7. A method as set forth in one of claims 1 through 6 **characterised in that** the generator (2) is coupled to the internal combustion engine (4), by means of a coupling device (3).

8. A method as set forth in one of claims 2 through 7 **characterised in that** an electric power ($P_{el}$) delivered to the power supply network (1) by the generator (2) prior to the network fault is detected as an operating parameter, wherein the amount (m) of the fuel introduced into the internal combustion engine (4) is increased in dependence on the electric power ($P_{el}$) delivered to the power supply network (1) by the generator prior to the network fault.

9. A method as set forth in claim 8 **characterised in that** the amount (m) of the fuel introduced into the internal combustion engine (4) is substantially proportionally to a difference in the delivered electric power ($P_{el}$) prior to the network fault in relation to a predeterminable reference value - preferably the rated power.

10. A method as set forth in one of claims 2 through 9 **characterised in that** a rotary speed of the generator (2) and/or the generator (2) and internal combustion engine (4) connecting coupling device (3) and/or the internal combustion engine (4) prior to the network fault is detected as the operating parameter, wherein the amount (m) of the fuel introduced into the internal combustion engine (4) is increased in dependence on the rotary speed prior to the network fault.

11. A method as set forth in one of claims 2 through 10 **characterised in that** a transient rotary speed of the generator (2) and/or the generator (2) and internal combustion engine (4) connecting coupling device (3) and/or the internal combustion engine (4) is detected as the operating parameter during the network fault, wherein the amount (m) of the fuel introduced into the internal combustion engine (4) is increased substantially proportionally to a difference in the transient rotary speed relative to the rotary speed prior to the network fault.

12. A method as set forth in one of claims 2 through 11 **characterised in that** a change in rotary speed of the generator (2) and/or the generator (2) and internal combustion engine (4) connecting coupling device (3) and/or the internal combustion engine (4) is detected as the operating parameter during the network fault, wherein the amount (m) of the fuel introduced into the internal combustion engine (4) is increased in dependence on the magnitude of the change in rotary speed.

13. A method as set forth in one of claims 2 through 12 **characterised in that** a torque ($M_L$) at an engine shaft (8) of the internal combustion engine (4) and/or at a rotor shaft (7) of the generator (2) is detected as the operating parameter during the network fault, wherein the amount (m) of the fuel introduced into the internal combustion engine (4) is increased in dependence on the torque ($M_L$).

14. A method as set forth in one of claims 2 through 13 **characterised in that** a load angle (5) of the generator (2) is detected as the operating parameter during the network fault, wherein the amount (m) of the fuel introduced into the internal combustion engine (4) is increased substantially indirectly proportionally to the magnitude of the detected load angle (5).

15. A method as set forth in one of claims 2 through 14 **characterised in that** the amount (m) of the fuel introduced into the internal combustion engine (4) is increased at a maximum to a predeterminable maximum amount.

16. A method as set forth in one of claims 2 through 15 **characterised in that** oscillations in an operating parameter of the generator (2) during the network fault are detected, wherein the amount (m) of the fuel introduced into the internal combustion engine (4) is increased if the oscillations exceed a predeterminable intensity.

17. A method as set forth in claim 16 **characterised in that** oscillations in a load angle (5) of the generator (2) are detected, wherein the amount (m) of the fuel introduced into the internal combustion engine (4) is increased if the oscillations are of an amplitude of more than 2 degrees, preferably more than 10 degrees.

**Revendications**

1. Procédé d'exploitation d'un moteur à combustion interne (4) relié avec un générateur électrique (2), plus particulièrement un générateur synchrone, pendant une erreur de réseau, plus particulièrement pendant un court-circuit électrique, dans un réseau d'alimentation d'énergie (1) relié avec le générateur (2), une puissance mécanique ($P_{mech}$) générée par le moteur à combustion interne (4) étant introduite dans le générateur (2) et convertie dans le générateur (2) en puissance électrique ($P_{el}$), la puissance électrique ($P_{el}$) étant distribuée dans le réseau d'alimentation d'énergie (1), **caractérisé en ce que** la puissance mécanique ($P_{mech}$) générée par le moteur à combustion interne (4) est augmentée temporairement en fonction de la valeur d'au moins une grandeur d'exploitation du générateur (2) et/ou du moteur à combustion interne (4) avant l'erreur de réseau et/ou pendant l'erreur de réseau, afin de contrer une chute de vitesse de rotation survenant pendant un back-swing.

2. Procédé selon la revendication 1, **caractérisé en ce que** la puissance mécanique ($P_{mech}$) générée par le moteur à combustion interne (4) est augmentée en augmentant une quantité (m) d'un carburant introduit dans le moteur à combustion interne (4).

3. Procédé selon la revendication 2, **caractérisé en ce que** le carburant est introduit au moyen d'au moins un dispositif de dosage de carburant dans le moteur à combustion interne (4), de préférence dans une conduite d'admission du moteur à combustion interne (4), la quantité (m) du carburant introduit dans le moteur à combustion interne (4) étant augmentée de préférence en modifiant une position d'ouverture et/ou un temps d'ouverture de l'au moins un dispositif de dosage de carburant.

4. Procédé selon la revendication 3, **caractérisé en ce qu'**un dispositif de dosage de carburant est prévu pour chaque cylindre du moteur à combustion interne.

5. Procédé selon la revendication 4, **caractérisé en ce que**, pour l'introduction du carburant, un dispositif de dosage de carburant conçu comme une soupape proportionnelle est utilisé.

6. Procédé selon l'une des revendications 1 à 5, **caractérisé en ce que**, en tant que générateur (2), un générateur (2) avec une constante d'inertie inférieure ou égale à 1,5 Ws/VA, de préférence inférieure ou égale à 1 Ws/VA est utilisé.

7. Procédé selon l'une des revendications 1 à 6, **caractérisé en ce que**, pour la liaison du générateur (2) avec le moteur à combustion interne (4), un dispositif de couplage (3) est utilisé.

8. Procédé selon l'une des revendications 2 à 7, **caractérisé en ce que**, en tant que grandeur d'exploitation, une puissance électrique ($P_{el}$) introduite par le générateur (2) dans le réseau d'alimentation d'énergie (1) avant l'erreur de réseau est mesurée, la quantité (m) du carburant introduit dans le moteur à combustion interne (4) étant augmentée en fonction de la puissance électrique ($P_{el}$) introduite par le générateur (2) dans le réseau d'alimentation d'énergie (1) avant l'erreur de réseau.

9. Procédé selon la revendication 8, **caractérisé en ce que** la quantité (m) du carburant introduit dans le moteur à combustion interne (4) est augmentée de manière globalement proportionnelle à une différence entre une puissance électrique ($P_{el}$) générée avant l'erreur de réseau et une valeur de référence pouvant être prédéterminée, de préférence la puissance nominale.

10. Procédé selon l'une des revendications 2 à 9, **caractérisé en ce que**, en tant que grandeur d'exploitation, une vitesse de rotation du générateur (2) et/ou d'un dispositif de couplage (3) reliant le générateur (2) avec le moteur à combustion interne (4) et/ou du moteur à combustion interne (4) est mesurée avant l'erreur de réseau, la quantité (m) du carburant introduit dans le moteur à combustion interne (4) étant augmentée en fonction de la vitesse de rotation avant l'erreur de réseau.

11. Procédé selon l'une des revendications 2 à 10, **caractérisé en ce que**, en tant que grandeur d'exploitation pendant l'erreur de réseau, une vitesse de rotation transitoire du générateur (2) et/ou d'un dispositif de couplage (3) reliant le générateur (2) avec le moteur à combustion interne (4) et/ou du moteur à combustion interne (4) est mesurée, la quantité (m) du carburant introduit dans le moteur à combustion interne (4) étant augmentée de manière globalement proportionnelle à une différence entre la vitesse de rotation transitoire et la vitesse de rotation avant l'erreur de réseau.

12. Procédé selon l'une des revendications 2 à 11, **caractérisé en ce que**, en tant que grandeur d'exploitation pendant l'erreur de réseau, une variation de la vitesse de rotation du générateur (2) et/ou d'un dispositif de couplage (3) reliant le générateur (2) avec le moteur à combustion interne (4) et/ou du moteur à combustion interne (4) est mesurée, la quantité (m) du carburant introduit dans le moteur à combustion interne (4) étant augmentée en fonction de la valeur de la variation de vitesse de rotation.

13. Procédé selon l'une des revendications 2 à 12, **caractérisé en ce que**, en tant que grandeur d'exploitation pendant l'erreur de réseau, un couple ($M_L$) au niveau d'un arbre de moteur (8) du moteur à combustion interne (4) et/ou au niveau d'un arbre de rotor (7') du générateur (2) est mesuré, la quantité (m) du carburant introduit dans le moteur à combustion interne (4) étant augmentée en fonction du couple ($M_L$).

14. Procédé selon l'une des revendications 2 à 13, **caractérisé en ce que**, en tant que grandeur d'exploitation pendant l'erreur de réseau, un angle de charge (5) du générateur (2) est mesuré, la quantité (m) du carburant introduit dans le moteur à combustion interne (4) étant augmentée de manière indirectement proportionnelle à la valeur de l'angle de charge (5) mesuré.

**15.** Procédé selon l'une des revendications 2 à 14, **caractérisé en ce que**, en tant que la quantité (m) du carburant introduit dans le moteur à combustion interne (4) est augmentée au maximum jusqu'à une quantité maximum pouvant être prédéterminée.

**16.** Procédé selon l'une des revendications 2 à 15, **caractérisé en ce que**, en tant que les oscillations d'une grandeur d'exploitation du générateur (2) pendant l'erreur de réseau sont mesurées, la quantité (m) du carburant introduit dans le moteur à combustion interne (4) étant augmentée dans le cas où les oscillations dépassent une intensité pouvant être prédéterminée.

**17.** Procédé selon la revendication 16, **caractérisé en ce que** les oscillations d'un angle de charge (5) du générateur (2) sont mesurées, la quantité (m) du carburant introduit dans le moteur à combustion interne (4) étant augmentée dans le cas où les oscillations présentent une amplitude supérieure à 2 degrés, de préférence supérieur à 10 degrés.

Fig. 1

EP 2 868 903 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011088483 A1
- US 2012175876 A1

**In der Beschreibung aufgeführte Nicht-Patentliteratur**

- **TERUHISA KUMANO et al.** *Electrical Engineering in Japan,* 10. September 1989, vol. 109 (5), 31-39